# EUROPÄISCHE PATENTSCHRIFT

(11) **EP 0 595 784 B1**
(45) Veröffentlichungstag und Bekanntmachung des Hinweises auf die Patenterteilung: **21.08.1996**
(21) Anmeldenummer: 93890195.6
(22) Anmeldetag: 08.10.1993
(51) Int. Cl.: A01K 5/02

(54) **Verfahren zur dosierten Abgabe von Flüssigfutter an mehrere Abgabestellen und Anlage zur Durchführung des Verfahrens**
Method for the dosed delivery of wet feed to a plurality of delivery points and installation for carrying out this method
Procédé pour le dosage et la distribution d'un mélange alimentaire liquide dans des récépients différents et installation pour ce procédé

(30) Priorität: 27.10.1992 AT 2114/92
(43) Veröffentlichungstag der Anmeldung: 04.05.1994
(73) Patentinhaber: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Heiner, Dipl.-Ing.

(56) Entgegenhaltungen:
- EP-A- 0 491 312
- FR-A- 2 574 623
- US-A- 3 494 331

## Beschreibung

Die Erfindung betrifft ein Verfahren nach dem Oberbegriff des Patentanspruches 1.

Die Erfindung betrifft auch eine Anlage zur Durchführung des Verfahrens nach dem Oberbegriff des Patentanspruches 5.

Ein Verfahren und eine Anlage der gegenständlichen Art sind aus der FR-A 2 574 623 bekannt. Diese Anlage dient vorwiegend zur Verteilung von relativ dünnflüssigem Kleietrank auf Futtertröge. Es besteht die Möglichkeit, die jedem Auslaß zugeordnete Einzelfutterportion genau durch Abgabe aus dem Mischbehälter zu bestimmen und dann sozusagen per Rohrpost zu dem jeweils freigegebenen Auslaß zu fördern. Um diese Abgabe zu ermöglichen, wird bei der bekannten Anlage in der Ringleitung an jedem Auslaß ein Dreiwegeventil angeordnet, das über eine Fernsteuereinrichtung betätigt werden kann und in der einen Stellung dann, wenn der zugeordnete Auslaß momentan nicht für die Abgabe bestimmt ist, den Durchtrittsquerschnitt der Ringleitung freigibt, so daß Futter zu einer anderen Abgabestelle durchgefördert werden kann, und in der anderen Stellung den weiterführenden Zweig der Ringleitung sperrt und den zubringerseitigen Zweig dieser Ringleitung mit dem Auslaß verbindet. Entsprechend große Dreiwegeventile sind teuer und störungsanfällig. Überdies muß die gesamte Anlage von vornherein mit entsprechenden Ventilen ausgestattet sein, so daß eine Nachrüstung bestehender Flüssigfütterungsanlagen, die das Futter im reinen Pumpbetrieb zu den Auslässen fördern, nicht möglich erscheint. Bei derartigen Anlagen bleibt die Ringleitung frei und es sind einfache Absperrorgane in den entsprechenden, zu den Auslässen führenden Abzweigleitungen vorhanden. An den Dreiwegeventilen können sich Futterrückstände absetzen, so daß die hygienischen Bedingungen oft nicht eingehalten werden können und häufig Wartungen durchgeführt werden müssen. Schließlich kann es besonders bei Anlagen mit langen Leitungswegen der Ringleitung zu relativ langen Förderzeiten für jede einzelne Futterportion kommen, so daß sich auch die Gesamtzeit einer Fütterungsperiode gegenüber Anlagen, die mit reinem Pumpbetrieb arbeiten, wesentlich verlängert.

Ein Verfahren und eine Anlage, die im reinen Pumpbetrieb für das Flüssigfutter arbeiten, sind aus der EP-A 163 080 bekannt. Bei dieser Anlage wird ein mit einem eigenen Wassereinlaß versehener Zwischenbehälter mit absperrbarem Auslaß in den Mischbehälter vorgesehen, der über ein weiteres Absperrorgan im Endbereich einer Ringleitung angeschlossen werden kann. Bei dem mit dieser Auslage ausgeübten Verfahren geht man davon aus, daß bisher eine exakte Dosierung von Flüssigfutter unter Verwendung einer Wiegeeinrichtung am Mischbehälter oder von Zeitsteuereinrichtungen an den Auslässen im wesentlichen nur dann gewährleistet ist, wenn das Flüssigfutter mittels einer Förderpumpe in die Förderleitung gefördert und unter dem dabei aufgebauten Druck an den Auslässen abgegeben wird. Nach Entleerung des Mischbehälters bleibt in der Leitung ein Futterrest. Bei dem bekannten Verfahren nimmt der Zwischenbehälter einen Wasservorrat auf, der wenigstens dem Füllvolumen der Ringleitung entspricht und nach Entleeren des Mischbehälters in diesen eingeleitet wird, so daß mit seiner Hilfe unter Einsatz der Förderpumpe das noch in der Ringleitung befindliche Futter zu der bzw. den letzten Abgabestellen ausgedrückt wird. Beim nächsten Fütterungsvorgang wird im Mischbehälter wieder Futter zubereitet und für die Fütterung in die Ringleitung gepumpt, wobei das in der Ringleitung befindliche Wasser in den Zwischenbehälter ausgepumpt wird. Eine Rückführung von Futterresten in den Mischbehälter ist nicht vorgesehen. Es können auch nacheinander verschiedene Futtermischungen im Mischbehälter zubereitet und an bestimmten Auslässen abgegeben werden, wobei auch hier Futterreste durch Einsatz des Wassers an auswählbare Auslässe abgebbar sind. Eine exakte Dosierung ist nicht möglich, da nicht feststeht, bis zu welchem Auslaß einwandfrei dosiert wurde und auch die beim letzten, vor endgültiger Entleerung des Mischbehälters noch geöffnetem Auslaß abgegebene Futtermenge nicht eindeutig feststeht. Es kann zu sich aufschaukelnden Dosierfehlern kommen. Da zu deren Vermeidung die nach Entleerung des Mischbehälters in der Förderleitung befindliche Restfuttermenge erfaßt und berücksichtigt werden müßte. Die hygienischen Anforderungen werden nicht erfüllt. Nach diesen sollten nach jedem Fütterungsvorgang alle mit dem Flüssigfutter in Berührung kommenden Aufnahme- und Fördereinrichtungen gesäubert werden. Auch das immer wieder verwendete Wasser kann eine Brutstätte für Keime bilden. Die Verwendung von Frischwasser zum Ausdrücken des Futters bei jedem Fütterungsvorgang führt, wenn das Wasser im Stallbereich abläuft, zu einer unerwünschten, den Aufbereitungsprozeß verzögernden oder sogar behindernden Verdünnung der Gülle.

Bei Trockenfutter ist es an und für sich bekannt, in einer entsprechenden Förderleitung Druckluft als Fördermedium einzusetzen. Dabei ergeben sich entscheidende Probleme bei einer exakten Dosierung. Um trotzdem für das Trockenfutter eine einigermaßen brauchbare Dosierung zu erzielen ist es nach der DE-B 22 19 914 bekannt, auf der Förderleitung Dosierbehälter verschiebbar anzubringen, die nach Dosierskalen eingestellt werden, um für jeden Auslaß eine bestimmte Futtermenge vorzuwählen. Nach Einstellung des Dosierbehälters auf einen Auslaß wird Futter zugefördert, bis die vorbestimmte oder vorgewählte Futtermenge erreicht ist, die dann an den Auslaß abgegeben wird. Wegen der notwendigen Verschiebung des Dosierbehälters zu den einzelnen Abgabestellen und der Einstellungen der Futtermengen ist hier keine Automatisierung des Fütterungsvorganges möglich.

Aus dem SU-Erfinderschein SU 917 814 ist eine Anlage zur automatischen Fütterung mit Trockenfutter bekannt, bei der jeder Abgabestelle ein Dosierbehälter zugeordnet wird, bei dem die jeweils eingestellte Dosierung durch verstellbare, eine Verschlußklappe des Dosierbehälters in Schließstellung haltende Gewichte bestimmt ist. Bei der Futterabgabe wird aus einem Trichter vorbereitetes Trockenfutter in die Hauptförderleitung eingeleitet und dann durch Druckluftzufuhr zu den jeweiligen Abgabestellen befördert, wobei die Hauptleitung am jeweils zu füllenden Dosierbehälter freigegeben wird, was dadurch erfolgt, daß der durch den Dosierungsbehälter führende Leitungsteil durch die Klappe angehoben wird. Ist die Dosiermenge erreicht, bringt die Klappe den zunächst angehobenen Leitungsteil wieder in Fluchtstellung mit der Hauptleitung, so daß das Futter zur nächsten Abgabestelle weiterströmen kann. Nach Füllung aller Dosierbehälter werden sie gemeinsam über ein eigenes Gestänge zur Abgabe der Futterportionen an die einzelnen Freßstellen geöffnet.

Aus SU 835 409 ist es bekannt, Trockenfutter im Luftstrom zu transportieren und in den Futterstrom Wasser in großen Mengen einzuspritzen, um an den Abgabestellen Flüssigfutter zu erhalten. Eine automatische Dosierung der Futtermenge an den einzelnen Futterstellen ist hier weder vorgesehen noch möglich.

Aufgabe der Erfindung ist es, ein Verfahren gemäß dem Oberbegriff des Anspruches 1 anzugeben, bei dem eine einfache Anlagenkonstruktion und im Bedarfsfall eine Umrüstung bestehender Pumpanlagen auf das neue Verfahren möglich und allen Anforderungen der Hygiene entsprochen wird. Eine Teilaufgabe der Erfindung besteht in der Angabe von Verfahrensschritten, die eine Verkürzung der Fütterungszeiten ermöglichen, ohne dabei die Dosiergenauigkeit zu beeinträchtigen. Schließlich besteht eine Teilaufgabe der Erfindung in der Schaffung einer zur Durchführung beider Verfahrensvarianten geeigneten Anlage.

Die gestellte Hauptaufgabe wird durch die Verfahrensschritte des Patentanspruches 1 gelöst. Im Gegensatz zum bekannten Verfahren werden bei der erfindungsgemäßen Ausführung an den Abzweigen der Ringleitung keine Dreiwegeventile benötigt, so daß an sich in den Abzweigen gleiche Ventile wie bei den bisherigen Flüssigfütterungsanlagen verwendet werden können und auch die Möglichkeit besteht, eine vorhandene Flüssigfütterungsanlage durch Ergänzung durch den Drucklufterzeuger und Anordnung einiger Steuerventile und Leitungen für die Durchführung des erfindurchgsgemäßen Verfahrens umzurüsten. Da in der Ringleitung selbst an den Abzweigen keine Ventile notwendig sind, wird die Anlage einfach, das Ansetzen von Futterrückständen wird verhindert und es ist auch eine nachträgliche Reinigung der Leitungen und Auslässe möglich.

Wenn in die Druckluft gemäß Anspruch 2 unter Bildung eines Sprühnebels Wasser eingespritzt wird, dann ist dies sowohl für eine Reinigung gemäß Anspruch 3 von Vorteil als auch eine Hilfe bei der Förderung von porösem Flüssigfutter, da durch das eingesprühte Wasser vor allem am beaufschlagungsseitigen Ende der Futterportion ohne wesentliche Vergrößerung des Flüssiganteiles solche Poren im Futter geschlossen und dadurch die Förderwirkung verbessert wird, da dann die Futterportion wie ein Pfropfen durch die Leitung bis zum geöffneten Auslaß getrieben wird.

Wie eingangs erwähnt wurde, wird die Förderleitung über eine Dosiereinrichtung vom Mischbehälter aus befüllt. Für die Dosiereinrichtung kann dabei ein eigener Dosierbehälter vorgesehen werden, dessen Inhalt jeweils gewogen und dann durch Druckluftzufuhr zur bestimmten Abgabestelle gefördert wird. Es ist aber auch möglich, gleich den Mischbehälter als Wiegebehälter auszubilden und das Futter zunächst mittels einer Förderpumpe zu entnehmen, bis die jeweilige Abgabemenge für eine Portion erreicht ist, wonach die Weiterförderung durch Druckluft erfolgt. Diese Ausführung empfiehlt sich besonders dann, wenn nur ein Teil der Gesamtfuttermenge nach dem erfindungsgemäßen Hauptverfahren verteilt, die übrige Futterausteilung aber im wesentlichen nach dem herkömmlichen Verfahren durch Weiterpumpen des Flüssigfutters im kontinuierlichen Strom und entsprechende Austeilung erfolgt. In diesem Fall wird zur Erzielung einer exakten Dosierung gemäß Anspruch 4 vorgegangen.

Eine vor allem für das Verfahren nach den Ansprüchen 1 und 4 geeignete Anlage ist in ihren Grundzügen im Anspruch 5 angegeben.

Dabei kann die im Gegenstrom zugeführte Druckluft in geringerer Menge bzw. unter geringerem Druck als die Förderluft eingesetzt werden.

Insbesondere am Ende der Abgabe einer Futterportion an einer ausgewählten Futterstelle könnte es unter dem Luftdruck und dem Luftaustritt zu einem Verspritzen oder Versprühen von Futterresten kommen. Um dies zu vermeiden, können Ausbildungen nach den Ansprüchen 6 oder 7 Verwendung finden. Die Vorteile der erfindungsgemäßen Ausbildung der Anlage bestehen auch darin, daß oft der größere Teil der Abgabestellen in herkömmlicher Weise relativ schnell mit den jeweiligen Futtermengen beschickt werden kann, so daß die möglicherweise etwas langsamere Beschickung der für die Druckluftbeschickung vorgesehenen Abgabestellen und die durch die Rückführung des Futters in den Mischbehälter bedingte Pause, bezogen auf die Gesamtfütterungszeit, kaum ins Gewicht fällt.

Ausbildungen gemäß Anspruch 8 ermöglichen die Sprühnebelbildung zur Verbesserung der Förderung und zur Reinigung. In der Praxis wird die Anlage vorzugsweise gemäß Anspruch 9 ausgestattet.

In der Folge wird die Erfindung im wesentlichen nur im Zusammenhang mit dem Verfahren nach Anspruch 4 und den Anlagen nach den Ansprüchen 5 - 9 beschrieben. Bei Anlagen mit reiner Luftförderung wird der Förderbetrieb über die Förderpumpe weggelassen.

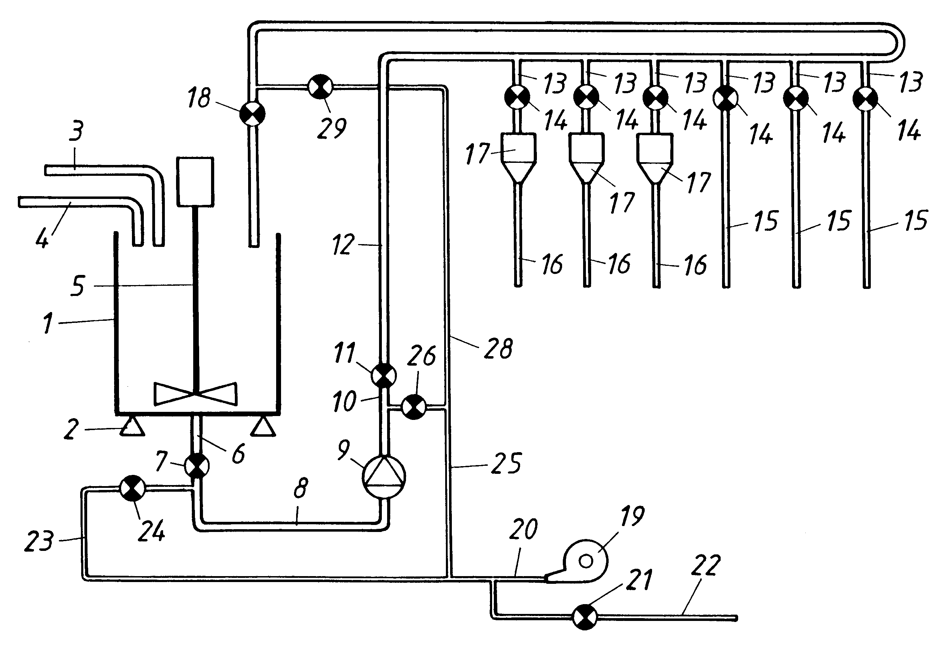

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Dabei ist in der einzigen Figur eine zur Durchführung des erfindungsgemäßen Verfahrens geeignete Fütterungsanlage im Schema dargestellt.

Die Anlage besitzt jeweils einen Mischbehälter 1, der auf einer Wiegeeinrichtung 2 abgestützt ist, über Leitungen 3, 4 mit Futterzutaten beschickt werden kann und ein antreibbares Rührwerk 5 aufweist. Im Mischbehälter 1 wird jeweils eine sich als Summe der auszuteilenden Einzelportionen darstellende Futtermenge vorbereitet. An einen Auslaß 6 des Mischbehälters 1 schließt mit möglichst kurzem Abstand ein Absperrorgan 7 an, von dem eine Leitung 8 zur Saugseite einer Pumpe 9 führt, deren Auslaßstutzen 10 über ein weiteres Absperrorgan 11 mit einer Ringleitung 12 verbunden ist, an die über abzweigende Leitungen 13 und einzeln gesteuert betätigbare Absperrorgane 14 zu Abgabestellen führende Auslaßleitungen 15, 16 anschließen. Die Auslaßleitungen 15 sind beim reinen Pumpbetrieb beschickbaren Abgabestellen zugeordnet, wogegen die Auslaßleitungen 16 auswählbaren Abgabestellen zugeordnet sind. In den Leitungen 16 können Luftabscheider 17 vorgesehen werden. In der Praxis wird man beispielsweise je zwanzig Auslaßleitungen 15 zwei bis drei Auslaßleitungen 16 zuordnen. Die Ringleitung 12 führt über ein Absperrorgan 18 in den Mischbehälter 1 zurück. Die Absperrorgane 7, 11, 14 und 18 sind Absperrorgane, die in geöffnetem Zustand jeweils den gesamten Querschnitt der von ihnen abgeschlossenen Leitung 8, 10, 12, 13 freigeben. Soweit bisher beschrieben wurde, entspricht die Anlage mit Ausnahme der Luftabscheider 17 einer herkömmlichen Fütterungsanlage. In der Folge wird die Funktion der Anlage im Zusammenhang mit der Zubereitung mit nur einer Futtermischung beschrieben. Es können selbstverständlich nacheinander verschiedene Futtermischungen im Mischbehälter 1 zubereitet und an ausgewählten Auslaßleitungen 15 bzw. 16 abgegeben werden. Für die Steuerung aller Funktionen wird vorzugsweise ein programmierbarer Fütterungscomputer eingesetzt, der auch mit der Wiegeeinrichtung 2 und Dosiereinrichtungen in den Leitungen 3, 4 Verbindung hat.

Est ist eine als Turbokompressor oder Luftturbine ausgebildete Druckluftquelle 19 vorhanden, die über die Steuereinrichtung im Bedarfsfall eingeschaltet wird und Druckluft an eine Leitung 20 abgibt, in die über ein Absperrorgan 21 und einen Endzerstäuber eine Wasserleitung 22 mündet. Von der Leitung 20 führt ein Zweig 23 zu einem Absperrorgan 24 und nach diesem unmittelbar hinter dem Absperrorgan 7 in die Leitung 8. Ein weiterer Zweig 25 mündet über ein Absperrorgan 26 unmittelbar vor dem Absperrorgan 11 in der Leitung 10. Die Leitungsabschnitte 8, 10, 12 bilden miteinander die Förderleitung für das Flüssigfutter.

Nach Zubereitung der entsprechenden Futtermittelmenge im Mischbehälter 1 wird beim Fütterungsbetrieb bei geöffneten Absperrorganen 7 und 11 die Pumpe 9 eingeschaltet, so daß das Flüssigfutter in die Ringleitung 12 gepumpt und durch Öffnen der Absperrorgane 14 nacheinander an den von den Leitungen 15 beschickten Abgabestellen ausgegeben wird. Die jeweilige Abgabemenge kann über die Wiegeeinrichtung 2 und/oder durch Zeitsteuerung der Öffnungszeit der Absperrorgane 14 erreicht werden. Befindet sich nach Beschickung aller Auslaßleitungen 15 noch ein Futterrest im Behälter 1, dann wird er durch Öffnen des entsprechenden Absperrorganges an eine der Auslaßleitungen 16 abgegeben, wobei aber die Abgabemenge erfaßt wird. Der Pumpbetrieb mittels der Pumpe 9 ist zu Ende, sobald die Leitungen 6, 8 bzw. zumindest der Mischbehälter 1 leer sind. Nun wird das Absperrorgan 7 geschlossen, der Während der Futterausteilung durch Druckluftzufuhr über 23, 24 oder 25, 26 bleibt das Absperrorgan 18 geschlossen und es wird über eine Leitung 28 und ein Absperrorgan 29 auch von der anderen Seite der Ringleitung 12 her Druckluft eingeblasen, so daß ein Weiterströmen der Futterportion über die ausgewählte Abgabestelle 16 hinaus sicher verhindert wird.

Drucklufterzeuger 19 eingeschaltet und das Absperrorgan 24 geöffnet, so daß die Druckluft bei geöffnetem Absperrorgan 18 und geschlossenen Absperrorganen 14 den Futerrest in den Mischbehälter 1 zurückfördert. Der Druckluft kann über 21, 22 Wasser in Form eines Sprühnebels zugesetzt sein. Der Futterrest wird nun im Behälter 1 über die Wiegeeinrichtung 2 erfaßt. Anschließend wird das Absperrorgan 7 wieder geöffnet, die Druckluftzufuhr zunächst unterbrochen und eine über die Wiegeeinrichtung bestimmte Teilmenge des Futterrestes über 6, 8 in die Leitung 12 gefördert. Nun wird eines der Absperrorgane 14 an den auswählbaren Auslaßleitungen 16 geöffnet und ihm durch Druckluftzufuhr über 23, 24 oder 25, 26 diese abgewogene Teilportion zugeführt, so daß sie nach Abscheidung der Luft in 17 über 16 ausgegeben wird. Dann wird die nächste Teilmenge gewogen und in der beschriebenen Weise zur nächsten Auslaßleitung 16 befödert, bis der Futterrest vollständig verbraucht ist. Nach Beendigung des gesamten Fütterungsbetriebes kann man über 19, 20, 21, 22 einen aus Druckluft und Wasser gebildeten Sprühnebel vorzugsweise über 23, 24 in das Leitungssystem 8, 12 einblasen und nacheinander zunächst die Absperrorgane 14 und dann das Absperrorgan 18 öffnen, so daß alle Auslässe und das gesamte Leitungssystem durch den Sprühnebel gereinigt werden.

Es wurde schon erwähnt, daß dadurch eine brauchbare Förderung der Futterreste bzw. Futterportionen erzielt werden kann, daß Druckluft mit niedrigem Druck, aber großen Fördermengen eingesetzt wird. Die Förderleistung läßt sich auch durch Einblasen von Wasser zur Bildung eines Sprühnebels verbessern, da durch die Feuchtigkeitszufuhr das Förderverhalten des Flüssigfutters verbessert bzw. Poren im Flüssigfutter, die den Luftdurchtritt erleichtern würden, geschlossen werden. Da über die Wiegeeinrichtung 2 die Menge der an den ausgewählten Auslässen 16 auszuteilenden Futterportionen ermittelt wird, spielt eine allfällige Gewichtszunahme der Portion durch anlagerndes Wasser keine Rolle und bei praktisch allen auszuteilenden Futtersorten ergibt sich durch den geringen Wasserzusatz keine Verschlechterung der Futterqualität.

## Patentansprüche

1. Verfahren zur dosierten Abgabe von Flüssigfutter an mehrere Abgabestellen (15, 16), die entlang wenigstens einer aus einem Mischbehälter (1) mit dem Flüssigfutter beschickbaren, als Ringleitung ausgebildeten Förderleitung (6, 8, 10, 12) angeordnet sind und einzeln freigebbare Auslässe (14) zur Abgabe vorbestimmter Futterportionen aufweisen, wobei Futterportionen durch eine im Bereich des Mischbehälters (1) vorgesehene Dosiereinrichtung (2, 9) vorbestimmt und einzeln mittels Druckluft durch die Förderleitung zu dem freigegebenen Auslaß (14) der jeweiligen Abgabestelle (15, 16) gefördert werden, dadurch gekennzeichnet, daß während der Förderung einer für eine ausgewählte Abgabestelle (16) bestimmten Futtermenge durch Druckluftzufuhr auf den freigegebenen Auslaß (14) zu in den in Förderrichtung hinter der ausgewählten Abgabestelle liegenden Teil der Ringleitung (12) im Gegenstrom ebenfalls Druckluft eingeblasen wird, so daß die jeweilige Futterportion und die Druckluft am freigegebenen Auslaß (14) abgegeben werden.

2. Verfahren nach Anspruch 1, dadurch gekennzeichnet, daß in die Druckluft unter Bildung eines Sprühnebels Wasser eingespritzt wird.

3. Verfahren nach den Ansprüchen 1 und 2, dadurch gekennzeichnet, daß die Förderleitung (8, 10, 12) nach Abgabe aller Futterportionen durch Durchblasen mit Druckluft gereinigt wird.

4. Verfahren nach einem der Ansprüche 1 - 3, dadurch gekennzeichnet, daß die Förderleitung (8, 10, 12) bei Fütterungsbeginn mittels einer Förderpumpe (9) aus dem Mischbehälter mit Flüssigfutter beschickt wird und an einzeln freigebbaren Auslässen (15) dosierte, über die Förderpumpe (19) zugebrachte Futterportionen abgegeben werden, daß nach der ersten Entleerung des Mischbehälters (1) mittels der Förderpumpe (9) der im Leitungssystem (8, 10, 12) befindliche Futterrest zunächst mittels Druckluft zum Mischbehälter (1) zurückgefördert und gewogen wird und daß dann mittels der Förderpumpe (9) für jeweils eine von mehreren ausgewählten Abgabestellen (16) vorgesehene Futterportionen, deren Größe durch die Gewichtsabnahme des im Mischbehälter (1) befindlichen Futterrestes bestimmt wird, einzeln in die Förderleitung (6, 8, 10, 12) gedrückt und dann durch Einblasen der Druckluft zum Auslaß (16) der Abgabestelle befördert werden.

5. Anlage zur Durchführung des Verfahrens nach einem der Ansprüche 1 - 4, mit einem mit den Futterzutaten beschickbaren, als Wiegebehälter ausgebildeten Mischbehälter (1) und einer Flüssigfutter-Förderpumpe (9), die das Futter aus dem Mischbehälter (1) in wenigstens eine als zum Mischbehälter (1) zurückführende Ringleitung ausgebildete Förderleitung (6, 8, 10, 12) fördert, entlang der Abgabestellen mit einzeln gesteuert freigebbaren Auslässen (14) zur dosierten Abgabe von Futter angeordnet sind, wobei eine Druckluftquelle (19) über Leitungen (20, 23, 25, 28) mit der Förderleitung (8, 10, 12) verbindbar, die Förderleitung über Absperrorgane (24, 26, 29) mit der Druckluft auch im Sinne einer Rückführung des Futterrestes in den Mischbehälter (1) beaufschlagbar und der mit der Wiegeeinrichtung (2) ausgestattete Mischbehälter (1) als Dosierbehälter ausgebildet ist, so daß Futter unter Verwendung der Wiegeeinrichtung (2) mittels der Förderpumpe (9) in je einer einzelnen, ausgewählten Abgabestelle (16) zugeordneten Einzelportionen in die Förderleitung (12) abgebbar und die jeweilige Einzelportion durch gesteuerte Druckluftzufuhr zur Förderleitung in dieser bis zu dem dann freigebbaren Auslaß (14) der ausgewählten Abgabestelle (16) transportierbar ist, dadurch gekennzeichnet, daß die Förderleitung (8, 10, 12) über die Absperrorgane (24, 26, 29) sowohl von der einen Seite der Ringleitung (12) her durch Druckluftzufuhr mit der für die jeweils ausgewählte Abgabestelle (16) bestimmten Futterportion als auch zur Verhinderung des Weitertransportes dieser Futterportion über die ausgewählte Abgabestelle hinaus von der anderen Seite der Ringleitung her im Gegenstrom mit Druckluft beaufschlagbar ist.

6. Anlage nach Anspruch 5, dadurch gekennzeichnet, daß jede für die Futterzufuhr durch Druckluft auswählbare Abgabestelle einen dem Auslaß (16) vorgeordneten Luftabscheider (17) aufweist.

7. Anlage nach Anspruch 5 oder 6, dadurch gekennzeichnet, daß jede auswählbare Abgabestelle (16) mit mehrfach verzweigten, ein Vielfaches des Einlaßquerschnittes aufweisenden Ausgabeleitungen versehen ist.

8. Anlage nach einem der Ansprüche 5 - 7, dadurch gekennzeichnet, daß in wenigstens eine Druckluftleitung (20) ein mit einer Wasserleitung (22) verbindbarer Zerstäuber zur Erzeugung eines Sprühnebels aus Druckluft und Wasser mündet.

9. Anlage nach einem der Ansprüche 5 - 8, dadurch gekennzeichnet, daß zur Drucklufterzeugung ein Verdichter oder eine Luftturbine (19) vorgesehen ist, der bzw. die Druckluft in relativ großen Fördermengen von z.B. 5000 l/min bei relativ niedrigem Druck, z.B. 1,5 bar, abgibt.

## Claims

1. A method for the metered delivery of liquid feed to a number of delivery stations (15, 16) disposed along at least one ring type conveying line (6, 8, 10, 12) chargeable with the liquid feed from a mixing tank (1), the delivery stations having individually openable outlets (4) for the delivery of predetermined feed portions, the same being predetermined by a metering device (2, 9) disposed near the mixing tank (1) and being conveyed individually by compressed air through the conveying line to the open outlet (14) of the particular delivery station (15, 16) concerned, characterised in that during the conveying of a feed quantity intended for a selected delivery station (16) by compressed air being supplied to the open outlet (14), compressed air is also injected in counter-current into that part of the ring line (12) which is disposed after the selected delivery station as considered in the conveying direction so that the particular feed portion concerned and the compressed air are delivered at the open outlet (14).

2. A method according to claim 1, characterised in that water is injected into the compressed air with the formation of a spray mist.

3. A method according to claims 1 and 2, characterised in that after delivery of all the feed portions the conveying line (8, 10, 12) is cleaned by compressed air being blown through it.

4. A method according to any of claims 1 to 3, characterised in that at the start of the feeding the conveying line (8, 10, 12) is charged with liquid feed from the mixing tank by means of a conveying pump (9) and metered feed portions supplied by way of the pump (19) are delivered at individually openable outlets (15), in that after the first emptying of the mixing tank (1) by means of the pump (9) the feed residue in the line system (8, 10, 12) is first returned to the mixing tank (1) by means of compressed air and is weighed, and in that feed portions which are intended in each case for one of a number of selected delivery stations (16) and whose weight is determined by the weight decrease of the feed residue in the mixing tank (1) are then forced individually by the pump (9) into the conveying line (6, 8, 10, 12), and are then conveyed by injection of compressed air to the outlet (16) of the delivery station.

5. An installation for performing the method according to any of claims 1 to 4 comprising: a mixing tank (1) constructed as a weighing tank and chargeable with feed ingredients; and a liquid feed conveying pump (9) which conveys the feed from the mixing tank (1) into at least one ring conveying line (6, 8, 10, 12) which returns to the mixing tank (1), arranged along the delivery stations having individually controllably openable outlets (14) for the metered delivery of feed, a compressed air source (19) being connectable by way of lines (20, 23, 25, 28) to the conveying lines (8, 10, 12), the same being adapted to be supplied by way of shut-off elements (24, 26, 29) with the compressed air including supply in the direction of a return of the feed residue to the mixing tank (1), the latter, which has the weighing device (2), being in the form of a metering tank, so that through the agency of the weighing device (2) and conveying pump (9) the feed can be delivered to the conveying line (12) in individual portions allotted each to an individual selected delivery station (16) and the individual portion concerned can be conveyed in the conveying line, by a controlled supply of compressed air to the conveying line, to the then openable outlet (14) of the selected delivery station (16), characterised in that the conveying line (8, 10, 12) can be supplied by way of the shut-off elements (24, 26, 29) from one side of the ring line (12) by compressed air supply with the feed portion intended for the particular delivery station (16) selected and, to prevent further conveyance of such feed portion beyond the selected feed station, can also be supplied from the other side of the ring line with compressed air in counter-current.

6. An installation according to claim 5, characterised in that each delivery station selectable for the supply of feed by compressed air has an air separator (17) which precedes the outlet (16).

7. An installation according to claim 5 or 6, characterised in that each selectable delivery station (16) has a number of branched delivery lines which form a multiple of the inlet cross-section.

8. An installation according to any of claims 5 to 7, characterised in that a sprayer connectable to a water line (22) for producing a spray mist of compressed air and water extends into at least one compressed air line (20).

9. An installation according to any of claims 5 to 8, characterised in that a compressor or an air turbine (19) is provided to produce compressed air and delivers the same in relatively large quantities of e.g. 5000 l/min at a relatively low pressure, for example, 1.5 bar.

## Revendications

1. Procédé pour distribuer des quantités dosées de nourriture liquide pour animaux à plusieurs postes de distribution (15, 16), ceux-ci étant disposés le long d'au moins une conduite d'alimentation (6, 8, 10, 12) qui peut être alimentée en nourriture liquide pour animaux à partir d'un réservoir mélangeur (1) et qui est réalisée sous la forme d'une conduite en boucle, et présentant des sorties (14) pouvant être libérées individuellement en vue de la distribution de rations prédéterminées de nourriture pour animaux, cependant que les rations de nourriture pour animaux sont prédéterminées par un dispositif de dosage (2, 9) qui est prévu dans la région du réservoir mélangeur (1), et qu'au moyen d'air comprimé, elles sont amenées individuellement par la conduite d'alimentation à la sortie libérée (14) du poste de distribution correspondant (15, 16), caractérisé par le fait que pendant le déplacement vers la sortie libérée (14), par amenée d'air comprimé, d'une quantité de nourriture pour animaux qui est destinée à un poste de distribution sélectionné (16), de l'air comprimé est également insufflé à contre-courant dans la partie de la conduite en boucle (12) qui est située en aval du poste de distribution sélectionné dans la direction du déplacement, de sorte que la ration de nourriture pour animaux correspondante et l'air comprimé sont distribués à la sortie libérée (14).

2. Procédé selon la revendication 1, caractérisé par le fait que de l'eau est injectée dans l'air comprimé en formant un brouillard de fines gouttelettes.

3. Procédé selon les revendications 1 et 2, caractérisé par le fait que la conduite d'alimentation (8, 10, 12) est nettoyée par soufflage à l'air comprimé après que toutes les rations de nourriture pour animaux ont été distribuées.

4. Procédé selon l'une des revendications 1 à 3, caractérisé par le fait que la conduite d'alimentation (8, 10, 12) est alimentée en nourriture liquide pour animaux depuis le réservoir mélangeur au moyen d'une pompe d'alimentation (9) lors du début de la distribution de nourriture pour animaux, et que des rations de nourriture pour animaux dosées et amenées par l'intermédiaire de la pompe d'alimentation (9) sont distribuées à des sorties (15) qui peuvent être libérées individuellement, par le fait qu'après que le réservoir mélangeur (1) a été vidé pour la première fois au moyen de la pompe d'alimentation (9), le reste de nourriture pour animaux qui se trouve dans le système de conduites (8, 10, 12) est ramené tout d'abord au réservoir mélangeur (1) au moyen d'air comprimé pour être pesé, et par le fait qu'au moyen de la pompe d'alimentation (9), des rations de nourriture pour animaux qui sont prévues à chaque fois pour un poste de distribution (16) sélectionné parmi plusieurs et dont l'importance est déterminée par la diminution du poids du reste de nourriture pour animaux contenu dans le réservoir mélangeur (1) sont alors poussées individuellement dans la conduite d'alimentation (6, 8, 10, 12) et amenées ensuite à la sortie (16) du poste de distribution par insufflation de l'air comprimé.

5. Installation pour la mise en oeuvre du procédé selon l'une des revendications 1 à 4, comprenant un réservoir mélangeur (1) qui est réalisé sous la forme d'un réservoir de pesage et qui peut être alimenté par des ingrédients de nourriture pour animaux, et une pompe (9) d'alimentation en nourriture liquide pour animaux qui déplace la nourriture pour animaux depuis le réservoir mélangeur (1) jusque dans au moins une conduite d'alimentation (6, 8, 10, 12) qui est réalisée sous la forme d'une conduite en boucle ramenant au réservoir mélangeur (1) et le long de laquelle sont disposés des postes de distribution pourvus de sorties (14), celles-ci pouvant être libérées en étant commandées individuellement en vue de la distribution dosée de nourriture pour animaux, cependant qu'une source d'air comprimé (19) peut être reliée à la conduite d'alimentation (8, 10, 12) par l'intermédiaire de conduites (20, 23, 25, 28), que la conduite d'alimentation peut être alimentée par l'air comprimé par l'intermédiaire d'organes d'arrêt (24, 26, 29), y compris dans le sens d'un renvoi du reste de nourriture pour animaux jusque dans le réservoir mélangeur (1), et que le réservoir mélangeur (1) équipé du dispositif de pesage (2) est réalisé sous la forme d'un réservoir de dosage, de sorte que de la nourriture pour animaux, moyennant l'utilisation du dispositif de pesage (2), peut être distribuée au moyen de la pompe d'alimentation (9) à la conduite d'alimentation (12) sous la forme de rations individuelles qui sont associées chacune à un poste de distribution individuel sélectionné (16), et que la ration individuelle correspondante peut être déplacée dans la conduite d'alimentation par une amenée contrôlée d'air comprimé dans celle-ci jusqu'à la sortie (14) du poste de distribution sélectionné (16) qui peut être alors libérée, caractérisée par le fait que la conduite d'alimentation (8, 10, 12) peut être alimentée en air comprimé à contre-courant par l'intermédiaire des organes d'arrêt (24, 26, 29), tant depuis l'un des côtés de la conduite en boucle (12) par une amenée d'air comprimé accompagnant la ration de nourriture pour animaux destinée au poste de distribution (16) qui a été sélectionné à chaque fois, que depuis l'autre côté de la conduite en boucle en vue d'empêcher la poursuite du déplacement de cette ration de nourriture pour animaux au-delà du poste de distribution sélectionné.

6. Installation selon la revendication 5, caractérisée par le fait que chaque poste de distribution qui peut être sélectionné pour l'amenée de nourriture pour animaux au moyen d'air comprimé comporte un séparateur d'air (17) qui est monté en amont de la sortie (16).

7. Installation selon la revendication 5 ou 6, caractérisée par le fait que chaque poste de distribution (16) pouvant être sélectionné est pourvu de conduites de distribution à bifurcations multiples dont la section transversale est un multiple de la section transversale d'entrée.

8. Installation selon l'une des revendications 5 à 7, caractérisée par le fait qu'un pulvérisateur qui peut être relié à une conduite d'eau (22) et qui est destiné à produire un brouillard de fines gouttelettes à partir d'air comprimé et d'eau débouche dans au moins une conduite d'air comprimé (20).

9. Installation selon l'une des revendications 5 à 8, caractérisée par le fait qu'en vue de produire l'air comprimé, il est prévu un compresseur ou une turbine à air (19) pour distribuer l'air comprimé avec un débit relativement élevé qui est égal par exemple à 5.000 l/min et sous une pression relativement faible qui est égale par exemple à 1,5 bar.
